# EUROPEAN PATENT APPLICATION

(11) **EP 1 637 848 A1**
(43) Date of publication of application: **22.03.2006**
(21) Application number: 05254106.7
(22) Date of filing: 30.06.2005
(51) Int. Cl.: G01F 11/18

(54) **An adjustable granule dispenser**

(30) Priority: 16.09.2004 US 942513
(71) Applicant: Rieke Corporation, Auburn IN 46705 (US)
(72) Inventor: Laveault, Richard A., Fort Wayne Indiana 46845 (US); Law, Brian R., Leicester LE3 6FR (GB); Stalions, Stephen E., Fort Wayne Indiana 46845 (US)
(74) Representative: Smith, Norman Ian

(57) **Abstract**

A product dispensing apparatus (20) for a granule product includes a unitary, plastic housing (22) having an open first end closed by a cap (21) and an open second end for the dispensing of product. The housing (22) includes a product storage compartment (28) that is accessible by way of the first end when the closing cap (21) is removed. A plunger (26) is received within the housing (22) and defines a cavity (32) for receipt of product from the storage compartment (28). The plunger (26) is a two-component assembly including a unitary body member (23) and a unitary slide member (24), the slide member fitting within the body member (23) and being movable relative thereto to vary the cavity size. As the plunger (26) travels during its cycle, product is transferred into the cavity (32) and then dispensed from the cavity (32) through the second end. The size of the cavity (32) defines the volume of the dose to be dispensed.

## Description

### BACKGROUND OF THE INVENTION

The present invention relates in general to product dispensers that enable the delivery of a product from a storage location to a remote site. The storage location may be integrated into the dispenser or may be separate. The remote site may be a use location or an intermediate holding location for temporary storage prior to end use. In the context of the present invention, the product is a dry, granular product, possibly a powder, that is stored within the dispenser. Typical products for use with the present invention include chemicals that need to be dispensed into a mixing container or deposited to a use location.

When dispensing a chemical into a mixing container or to another location for end use and/or further processing, there are various considerations that should be factored into the design of a dispenser. For example, if the chemical is an irritant, contact with the skin should be avoided. Any chemical dust that might be released into the air could potentially irritate and/or bum the eyes. For these reasons, it is usually desirable for the end user to keep any contact with the chemical to a minimum. Another consideration is being able to measure out and dispense the precise amount of chemical that is required. Using a scoop may help to avoid contact, but this method does not enable a precise measurement. Using a measuring cup might provide a more accurate way of measuring out the desired amount of chemical, but there is arguably a higher risk of contact and the chance that chemical dust will be released into the atmosphere in the immediate vicinity of the user. If the chemical to be dispensed comes in a pre-metered or pre-measured packet, it still has to be opened and emptied. Even if the packet or envelope skin is dissolvable, there is no adjustability to the dose amount. Varying the dose amount could entail the use of two or three or four individual packets to get the desired quantity.

The present invention addresses these considerations by providing an integrated storage container and dispenser. The dispensing mechanism provides a measured amount of product and, importantly, the dose of product to be dispensed can be selectively and repeatedly changed by the user. Adjustability to the dose to be delivered by the dispensing mechanism is an important aspect of the present invention. Further, the dispenser of the present invention encloses the product so that there is no chemical contact with the user and any airborne dust is kept to a minimum.

In view of the fact that the dispenser of the present invention also stores a supply of chemical, its overall size and weight are considerations in the design and use. For this reason, the present invention is considered to be a "small-dose" dispenser based on the likely amount of product (a few grams) to be dispensed at any one time as a "dose" and the likely frequency of use in dispensing the product. In this way, one pre-loaded dispenser can potentially last for several days or even weeks before needing to be refilled or possibly discarded and replaced. The fact that the present invention can be disassembled means that, once the initial charge of chemical is used, the dispenser can be refilled with the same chemical or a different chemical. The concept of a disposable design allows added security in terms of never needing to handle the chemical, such as during refilling. However, disposable designs typically come at a higher cost because the structure is not reused or refilled. Since there are advantages and disadvantages to both reusable designs and disposable designs, the present invention is constructed and arranged to cover both options.

The concept of adjustability is important whether the dispenser of the present invention is reusable or is disposable. For a reusable dispenser, the refilling with a different chemical could require a different small dose amount as the standard or recommended dose. This means that the dose of the dispenser needs to be adjustable. For a disposable dispenser, the user may simply want or need a smaller or larger dose relative to what was dispensed at the last use or may simply want or need a smaller or larger dose than the recommended measure. Accordingly, the present invention is constructed and arranged such that the dose of the dispenser is easily adjustable. Additionally, the components that comprise the dispenser of the present invention can be easily assembled and disassembled manually, allowing these component parts to be thoroughly cleaned in the event they are to be reused for a different chemical so as to avoid any cross-contamination.

The present invention provides an adjustable granule dispenser that provides those advantages and benefits as outlined above, all in a novel and unobvious manner.

### SUMMARY OF THE INVENTION

A dispensing apparatus for a dry product according to one embodiment of the present invention comprises a housing having an open first end and an open second end, the housing including a product storage compartment that is accessible by way of the first end, a closing cap received by the first end, and a plunger received within the housing and including a cavity for receipt of product from the storage compartment, the plunger being movable in the direction of the second end for the transfer of product within the cavity out through the second end.

One object of the present invention is to provide an improved dry product dispenser.

Related objects and advantages of the present invention will be apparent from the following description.

### BRIEF DESCRIPTION OF THE DRAWINGS

FIG. 1 is a front elevational view of a dry product dispensing apparatus according to a typical embodiment of the present invention.
FIG. 2 is a top plan view of the FIG. 1 dispensing apparatus.
FIG. 3 is a bottom plan view of the FIG. 1 dispensing apparatus.
FIG. 4 is a side elevational view of the FIG. 1 dispensing apparatus.
FIG. 5 is a side elevational view, in full section, of the FIG. 1 dispensing apparatus, as viewed along line 5-5 in FIG. 2.
FIG. 6 is a front elevational view of a closing cap comprising a portion of the FIG. 1 dispensing apparatus.
FIG. 7 is a bottom plan view of the FIG. 6 cap.
FIG. 8 is a side elevational view of the FIG. 6 cap.
FIG. 9 is a top plan view of the FIG. 6 cap.
FIG. 10 is a front elevational view of a housing comprising a portion of the FIG. 1 dispensing apparatus.
FIG. 11 is a top plan view of the FIG. 10 housing.
FIG. 12 is a bottom plan view of the FIG. 10 housing.
FIG. 13 is a side elevational view of the FIG. 10 housing.
FIG. 14 is a side elevational view, in full section, of the FIG. 10 housing, as viewed along line 14-14 in FIG. 11.
FIG. 15 is a front elevational view of a plunger body comprising a portion of the FIG. 1 dispensing apparatus.
FIG. 16 is a top plan view of the FIG. 15 plunger body.
FIG. 17 is a top plan view, in full section, of the FIG. 15 plunger body, as viewed along line 17-17 in FIG. 15.
FIG. 18 is a side elevational view of the FIG. 15 plunger body.
FIG. 19 is a rear elevational view of the FIG. 15 plunger body.
FIG. 20 is a front elevational view of a plunger slide comprising a portion of the FIG. 1 dispensing apparatus.
FIG. 21 is a top plan view of the FIG. 20 plunger slide.
FIG. 22 is bottom plan view of the FIG. 20 plunger slide.
FIG. 23 is a side elevational view of the FIG. 20 plunger slide.
FIG. 24 is a rear elevational view of the FIG. 20 plunger slide.

### DESCRIPTION OF THE PREFERRED EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

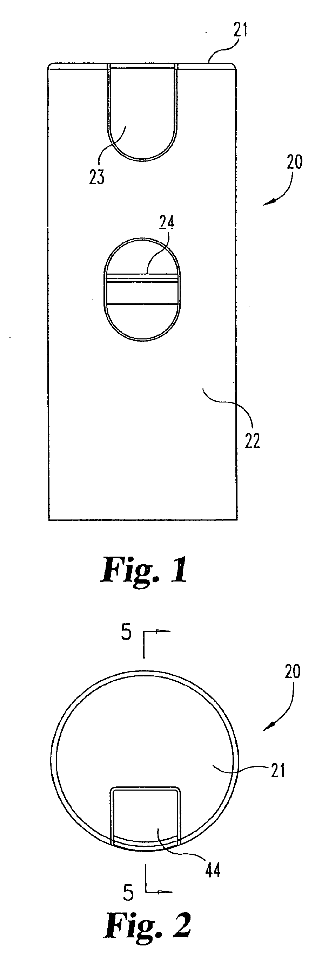

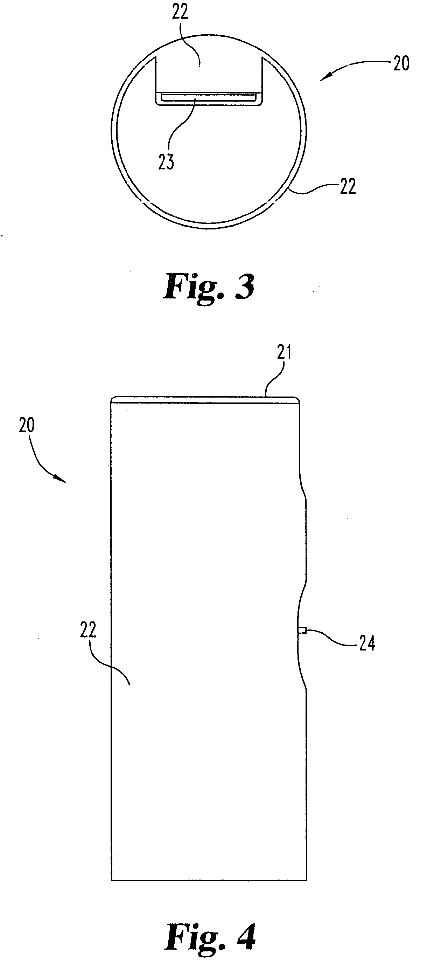

Referring to FIGS. 1-5, there is illustrated an adjustable granule dispenser 20 according to the present invention. As described herein, the adjustable granule dispenser 20 is constructed and arranged for dispensing dry product that may be classified as a granule product or a powder, depending on the size of the individual particulate.

Dispenser 20 includes, as its component parts, a cap 21, housing 22, plunger body 23, plunger slide 24, and spring 25. As will be described, slide 24 assembles into plunger body 23 and this subassembly unit functions as a movable plunger 26 that assembles into housing 22 and is axially movable relative to housing 22. The metal spring 25 is positioned between the plunger 26 and the base 22a of housing 22. The closing cap 21 presses into the upper open end 27 of housing 22 to close off the storage compartment 28 of housing 22.

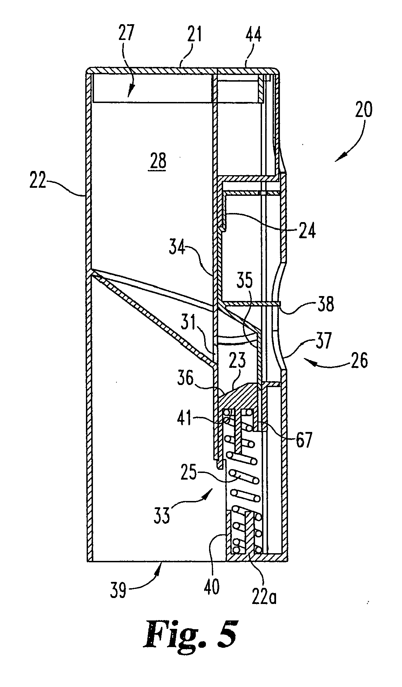

The use of dispenser 20 for dispensing a comparatively small dose of a granular product, such as a dry chemical powder or a chemical in small granule form, relies on the axial movement of plunger 26 relative to the housing 22. With product loaded into storage compartment 28, the downward movement of the plunger 26 causes it to slide across interior opening 31 of housing 22 and a dose of product is transferred from storage compartment 28 into cavity 32 of plunger 26. The transfer of product from within storage compartment 28 into plunger cavity 32 is achieved by the overlap of cavity 32 with opening 31 and the action of gravity. Any portion of cavity 32 that is initially (axially) above the upper edge of opening 31 may not be filled with product, depending on the speed of the return stroke and the "viscosity" of the product. However, cavity 32 will slide passed the opening when the plunger 26 is depressed so that any unfilled portion of the cavity is then filled with product. This filling of cavity 32 occurs before dispensing opening 33 is encountered by cavity 32. Before opening 33 is reached by cavity 32, wall 34 closes off opening 31. Cavity 32 is formed by the cooperation of wall 35 of slide 24 and wall 36 of body 23 (see FIG. 5).

In terms of the axial movement and the axial dimensions, it should be understood that, with the plunger 26 in its initial, upward position, prior to the dispensing stroke, product that is stored in compartment 28 is able to flow by way of gravity into cavity 32, thereby transferring a portion of the product within compartment 28 into cavity 32. Since the lower wall 36 of cavity 32 is not in overlapping relation with dispensing opening 33, the product is able to accumulate in cavity 32. Whether or not cavity 32 is completely filled with product at this stage, the start of the downward axial movement, as plunger 26 is depressed, pushes the upper portion of cavity 32 past opening 31. This action results in completely filling cavity 32 with a precisely measured and metered amount of product. The volume size of cavity 32 defines the volume size or amount of the dose of product to be dispensed during that particular stroke. The cavity 32 is filled with product before opening 33 is reached and before opening 33 is reached, opening 31 is closed by plunger 26. In view of the fact that the slide 24 is axially movable relative to body 23 to change the volume of cavity 32, the dose amount of product to be dispensed as part of any one stroke or cycle is adjustable. Simply by sliding the slide 24 up or down relative to the body 23, the volumetric size of the cavity 32 is changed. By marking the front of housing 22 around opening 37 with indicia that correspond to the cavity volume, lip 38 of slide 24 is able to be used, both as a marker to line up on the selected indicia in order to know what volume is selected for cavity 32, and as a means for manually moving slide 24 for selection of the desired cavity volume. This adjustability feature to selectively change the size of cavity 32, so as to change the amount of product to be dispensed during any one stroke, is an important feature of the present invention. The indicia marking around opening 37 indicates the size of the dose to be dispensed and this is governed by the size of cavity 32.

At the end of the plunger 26 stroke, all of the product in cavity 32 is dispensed by way of opening 33 and from there, out the open lower end 39 of housing 22. Wall 42 of housing 22 cooperates with other portions of housing 22 to define compartment 28. Additionally, it is the combination of inclined lower shelf 43 and wall 42 that define opening 31. Another wall portion 43a that extends below shelf 43 and below opening 31 cooperates with wall 40 to define opening 33.

The dispensing of product is by the action of gravity and the angled surface of wall 36 facilitates this transfer of product from cavity 32 through opening 33 and ultimately through opening 39. The dispensing of product from cavity 32 begins immediately once the lower edge of cavity 32 reaches the upper edge of opening 33. The plunger 26 continues its downward travel as part of this stroke until there is abutment between wall 40 of base 22 and surface 41 of plunger 26. Releasing the downward pushing force on plunger top 44 allows spring 25 to push upwardly on plunger 26 and return the plunger to its starting position for the dispensing of another dose of product. The user is able to watch the dispensing of product out through opening 39 and can tell when the cycle is completed and the plunger 26 can be released.

As plunger 26 is spring-biased back to its starting position, the lower edge of cavity 32 moves out of registration with the upper edge of opening 33. This means that whatever product begins to flow into cavity 32 as the plunger moves back to its start position will stay in cavity 32 and will not escape by way of opening 33 until it is intended as part of the next dispensing cycle. Product is able to flow into cavity 32 once the upper edge of cavity 32 reaches the lower edge of opening 31. While product begins to fill cavity 32 during this return stroke, if the cavity 32 is not completely filled at this time, the filling step is completed during the next dispensing stroke. With a dry, granular product or powder and with relatively small doses in the 5 to 10 gram size, and considering the effect of gravity relative to the angled surfaces, cavity 32 fills and empties very quickly.

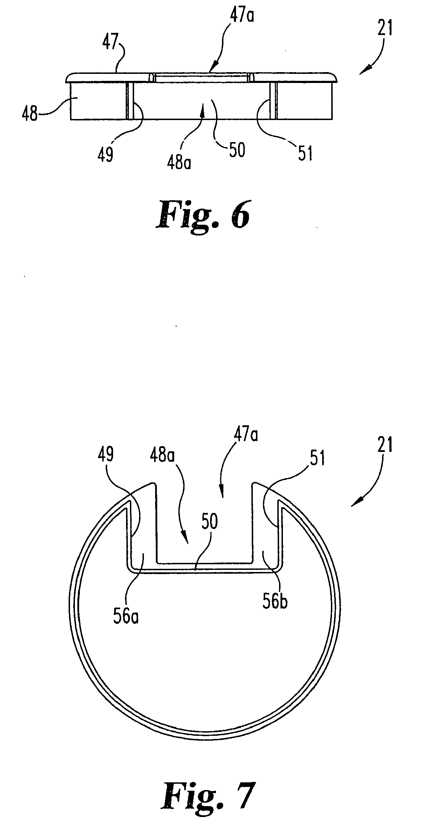

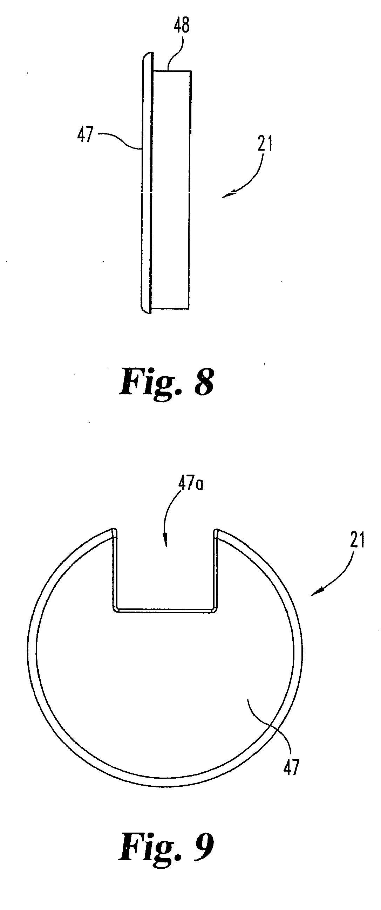

Referring to FIGS. 6-9, the structural details of cap 21 are illustrated. Cap 21 includes an upper surface 47 that is notched at 47a for clearance for plunger 26, specifically body 23. Wall 48 is constructed and arranged for insertion into the upper, open end 27 of housing 22. This fit between cap 21 and housing 22 needs to be a line-to-line sliding fit so that there is an adequate seal around compartment 28 so as to close off compartment 28 and protect whatever product is placed in compartment 28. Wall 48 is also notched at 48a for clearance for plunger 26. With the exception of notch 48a, wall 48 is generally cylindrical. Notch 48a is defined by sidewalls 49, 50, and 51 such that the objective of enclosing the product within compartment 28 is achieved. Open end 27 includes a channel opening 52 that matches the size and shape of plunger 26. Channel 52 is defined by housing walls 53, 54, and 55. Sidewalls 49, 50, and 51 closely fit around channels walls 53, 54, and 55, respectively.

The size difference between notch 47a and notch 48a creates offset lips 56a and 56b. As will be seen, the plunger body 24 includes offset portions 44a and 44b. When cap 21 is inserted into open end 27, offset lip 56a presses against and captures portion 44a and offset lip 56b presses against and captures portion 44b. This then allows plunger 26 to be depressed and when it springs back to its starting position, surface 44 does not rise above upper surface 47. This construction approach provides a smooth appearance while controlling the return travel of plunger 26.

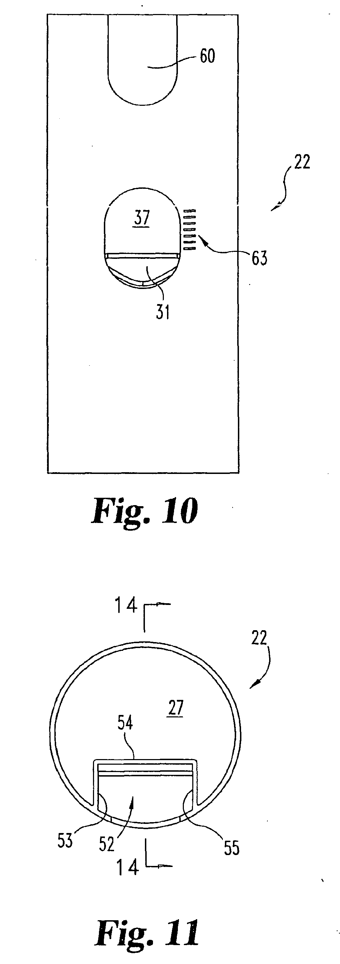

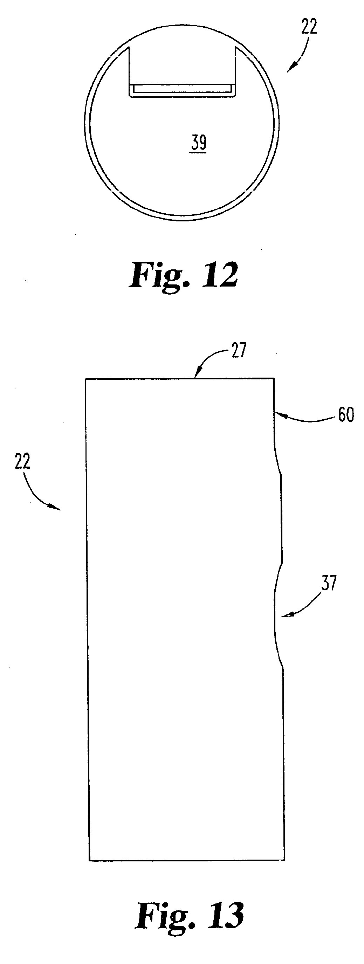

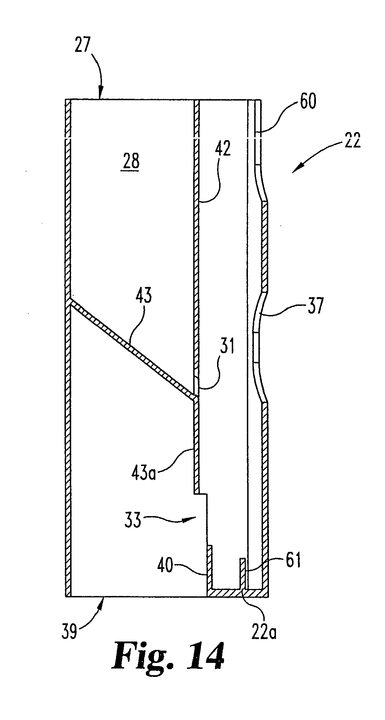

Referring now to FIGS. 10-14, the structural details of housing 22 are illustrated. Housing 22 includes, in addition to those features already described, a front slot 60 that provides clearance for the finger of the user as the plunger 26 is depressed. Channel 52 extends from upper open end 27 to closed base 22a. While the cross sectional shape of channel 52 changes slightly, the opening is compatible with plunger 26 for receipt of the plunger 26 and for accommodating the axial movement of the plunger.

Post 61 cooperates with post 62 on the plunger body 23 for receipt of spring 25. The spring 25 is open and readily slides onto these two posts 61 and 62 at opposite ends for keeping the spring 25 in alignment during axial travel of plunger 26 during the dispensing stroke and the return stroke.

Indicia 63 in the form of horizontal markings are provided for use as part of the adjustability feature. Each of these indicia 63 preferably has a corresponding numerical value that indicates the measured dose of product to be dispensed. Lip 38 is used as part of the dispensing gauge to line up with a selected indicia 63. Lip 38 is also used to manually move slide 24 so as to change the size of cavity 32 in a manner corresponding to the selected indicia value. By moving iip 38 to the desired indicia marking, the volume of the dose to be dispensed is set. The design of plunger 26 is such that slide 24 is able to move relative to body 23 over a short distance. As this movement occurs, the size of cavity 32 changes, and the positioning of lip 38 relative to indicia 63 gives a visual indication of the cavity 32 volume and of the size of the dose to be dispensed. Since the present invention is preferably a small-dose dispenser, though not necessarily limited to any particular size, the range of sizes for cavity 32 are expected to be between 10 grams at the uppermost indicia marking and 5 grams at the lowest indicia marking. The indicia markings are in one gram increments.

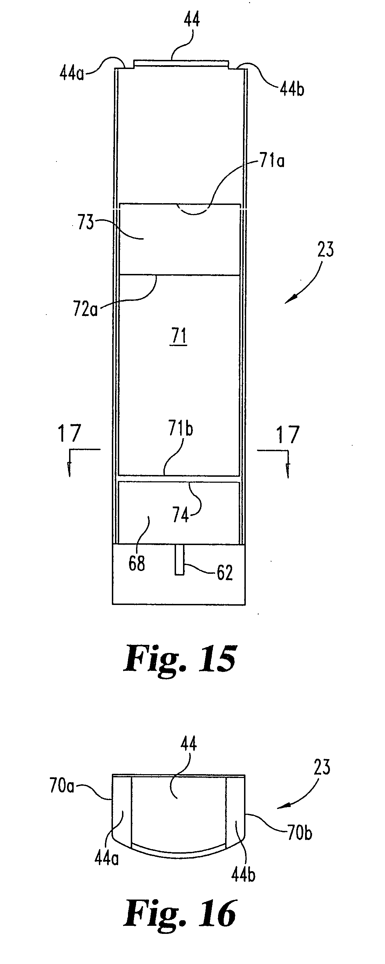

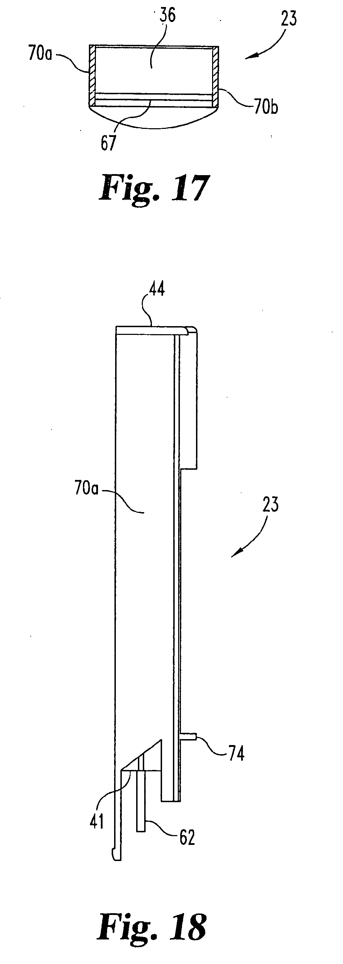

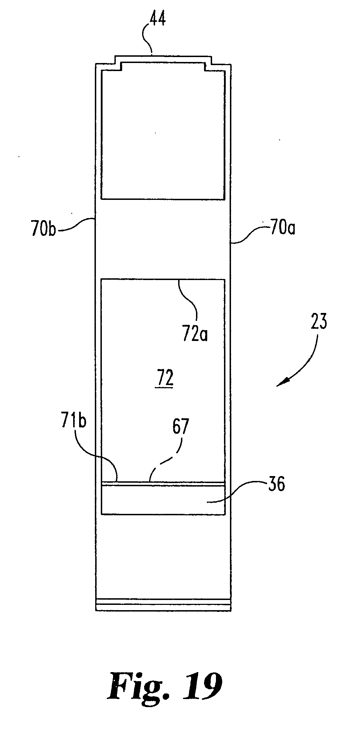

Referring to FIGS. 15-19, the structural details of plunger body 23 are illustrated. Body 23 includes, in addition to those features already described, a slot 67 for receipt of slide 24. Slot 67 has a depth down into lower lip 68 that accommodates the adjusting movement of slide 24 to set the volume of cavity 32. Slide 24 includes a lower panel 69 as part of wall 35 that has a sliding fit into slot 67.

Plunger body 23 has a generally rectangular form with sides 70a and 70b that help to define the front opening 71 and a rear opening 72. Rear wall panel 73 causes rear opening 72 to have a lower top edge 72a relative to the front opening 71 and its top edge 71a. In contrast, the lower edge 71b of front opening 71 ends at lip 74, while the lower edge 72b of rear opening 72 coincides with the lower edge of wall 36.

The defined cavity 32 includes wall 35 in combination with wall 36 and wall 35 includes angled portion 35a and vertical panel 69. Panel 69 has an axial length that is sufficient to remain received within slot 67 over the range of travel required for slide 24 to vary the size of cavity 32 from its minimum volume to its maximum volume.

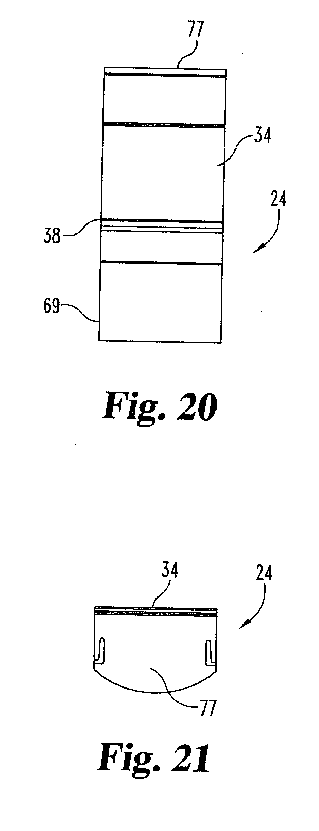

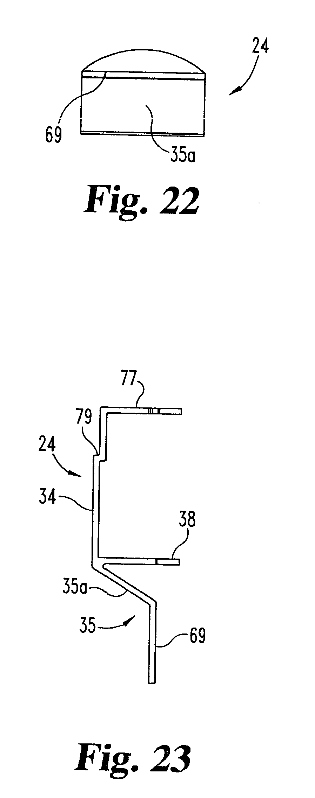

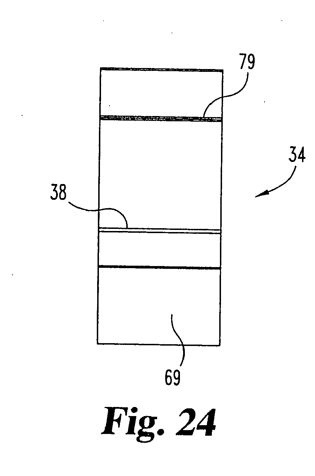

Referring to FIGS. 20-24, the structural details of plunger slide 24 are illustrated. Slide 24 includes, in addition to those features already described, an upper panel 77 and offset lip 79. Proper assembly of slide 24 into body 23 to create plunger 26 requires the insertion of panel 69 into slot 67. In this properly assembled orientation, edge 72a acts as an abutment stop for the upward movement of slide 24 relative to body 23. As slide 24 moves upwardly, offset lip 79 contacts edges 72a to set the upper limit. The bottom of slot 67 sets the lower limit of travel of slide 24.

Each of the component parts of dispenser 20, except for spring 25, is a unitary, molded plastic part. The assembly and disassembly of these component parts is accomplished manually, without any need for fasteners, adhesive, or hand tools. The dispenser 20, as a result of these fabrication choices, is light in weight, low cost, easy to disassemble and clean, and easy to use.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. A dispensing apparatus for a dry product comprising:
a housing having an open first end and an open second end, said housing including a product storage compartment that is accessible by way of said first end;
a closing cap received by said first end; and
a plunger received within said housing and including a cavity for receipt of product from said storage compartment, said plunger being movable in the direction of said second end for the transfer of product within said cavity out through said second end.

2. The dispensing apparatus of claim 1 wherein said housing includes a storage compartment wall adjacent said plunger, said storage compartment wall defining an opening constructed and arranged for the transfer of product into said cavity.

3. The dispensing apparatus of claim 2 wherein said housing defines a discharge opening adjacent said second end that is constructed and arranged for the transfer of product from said cavity.

4. The dispensing apparatus of claim 3 wherein said plunger includes a body having a contact surface for depressing said plunger relative to said housing.

5. The dispensing apparatus of claim 4 wherein said plunger further includes a slide that is received by said body.

6. The dispensing apparatus of claim 5 wherein said body defines a receiving slot and said slide includes a panel inserted into said receiving slot as part of said plunger.

7. The dispensing apparatus of claim 6 wherein said receiving slot and said panel are constructed and arranged for the slide to be movable relative to the body to vary the size of said cavity wherein varying the cavity size varies the size of the product dose to be dispensed.

8. A dispensing apparatus for a dry product comprising:
a refillable product container constructed and arranged for holding a volume of product, said product container defining a fill opening, a dispensing opening, and a transfer opening; and
a movable plunger assembled into said product container and defining a product transfer cavity, said movable plunger being constructed and arranged for said transfer cavity to slide across said transfer opening wherein product is transferred through said transfer opening into said transfer cavity by the action of gravity.

9. The dispensing apparatus of claim 1 or claim 8 wherein said plunger includes a body having a contact surface for depressing said plunger relative to said housing.

10. The dispensing apparatus of claim 1 or claim 9 wherein said plunger further includes a slide that is received by said body.

11. The dispensing apparatus of claim 1 or claim 10 wherein said body defines a receiving slot and said slide includes a panel inserted into said receiving slot as part of said plunger.

12. The dispensing apparatus of claim 1 or claim 11 wherein said receiving slot and said panel are constructed and arranged for the slide to be movable relative to the body to vary the size of said cavity wherein varying the cavity size varies the size of the product to be dispensed.

13. The dispensing apparatus of claim 8 which further includes a cap for closing said fill opening.

14. The dispensing apparatus of claim 13 which further includes a spring positioned between said product container and said plunger for returning a depressed plunger to a start position.
